# EUROPEAN PATENT APPLICATION

(11) **EP 1 524 677 A1**
(43) Date of publication of application: **20.04.2005**
(21) Application number: 04012937.1
(22) Date of filing: 01.06.2004
(51) Int. Cl.: H01F 29/12, H02J 7/00

(54) **A charger**

(71) Applicant: SIEMENS AKTIENGESELLSCHAFT, 80333 München (DE)
(72) Inventor: Hoeyer, Michael, 9200 Aalborg SV (DK)

(57) **Abstract**

A charger (200) comprises a current input connector (203); a current output connector (201); means (207) for transforming an input current received through the current input connector (203) to an output current and passing it to the current output connector (201) further comprising a primary inductance (213) and a secondary inductance (211); and
adjustable means (205) for changing the relative position between the current output connector (201) and the current input connector (203) by moving the primary inductance (213) or secondary inductance (211).

## Description

### Field of the invention

The invention relates to devices suitable for charging, especially to chargers.

### Background of the invention

Many electronic devices can nowadays be operated on power obtained from one or more rechargeable batteries. Because a rechargeable battery can output current for a limited time only, it has to be recharged once in a while in order to enable further operation of a device powered by the rechargeable battery.

By many electronic devices, the rechargeable battery is located inside the electronic device. Because it would be cumbersome and time consuming to always remove the rechargeable battery for placing it into a charger, many of such electronic devices comprise a charger connector that is electrically connected to the charging pins of the rechargeable battery. The charger cable is then connected to the charger connector, and the charger is the plugged into mains from where the electric current with which the rechargeable battery is recharged is obtained.

Because the mains sockets are sometimes placed in locations where there are only a very limited space available, such as under a table, on a wallside, or close to the room heating. Most chargers used for portable electronic devices, especially mobile terminals, are so constructed that the charger is plugged directly to the mains socket and the charger cable to be plugged into the electronic device is then relatively long.

Sometimes it is very difficult to plug the charger to the socket since the available space is very limited.

Furthermore, the long cable may cause problems by getting entangled.

Published German patent application DE 102 37 892 A1 discloses a desktop stand for a portable electronic device. In order to avoid breaking the junction between a circuit board and a charger connector in the portable electronic device when the portable electronic device would not be inserted in a straight position to the charger connector, the head of the desktop stand has been made movable. The angle in which the head can move can vary.

If this approach were used in constructing a charger, so to say, the head of the charger were movable, the problem of avoiding the breaking of the junction in the portable electronic device could be avoided. Furthermore, if the angle in which the head can move would be large enough, the resulting charger would be suitable for fitting in many different positions. However, the resulting charger might be rather large.

### Summary of the invention

An object of the invention is to bring out a charger that can be used in a place where there is only a limited space available. This object can be achieved as set out in claim 1.

The dependent claims describe various advantageous embodiments of the invention.

### Advantages of the invention

If a charger comprising a current input connector, a current output connector, means for transforming an input current received through the current input connector to an output current and passing it to the current output connector further comprising a primary inductance and a secondary inductance further comprises adjustable means for changing the relative position between the current output connector and the current input connector thereby moving the primary inductance or secondary inductance, the flexibility of the charger can be improved by making one or both inductances movable. In addition, the charger can be made smaller since the length of the charger in one direction may become shorter when one or both inductances are movable in comparison to that when e.g. only the current output connector and the current input connector were movable.

If the primary inductance or secondary inductance is moved on, in, around, or at a ferrite placed between the primary inductance and the secondary inductance, the ferrite acts as axis around which the movement takes place. This ensures that the primary inductance or secondary inductance that is moved remains substantially close to the ferrite, so that the magnetic coupling between the primary and secondary inductances does not get disturbed by moving the primary and secondary inductances. In consequence, the efficiency of the charger is not drastically reduced.

If the charger further comprises means for limiting movement of said adjustable means, of the primary inductance, or of the secondary inductance, it can be ensured that the primary inductance will not end up in short-circuit with the secondary inductance.

If the means for limiting movement of said adjustable means, of the primary inductance, or of the secondary inductance joins to a ferrite, a solution saving space can be obtained since the ferrite may act as support for the means for limiting the movement.

If said adjustable means is adjustable by rotating or turning, the charger may be placed in a narrower opening. If the charger would fit to the opening but together with the electronic device it would not, the chances of fitting both the charger and the electronic device into the opening may be enhanced by adjusting the combination, especially the direction of a longer dimension of the combination, to fit in the opening.

If the current output connector is accommodated on the rotatable or turnable head, the cable can be omitted thus solving the problem of entabling wires. Furthermore, if the current input connector is accommodated on a base that shows an opening, and if the turnable or rotatable head comprises a member fitting to said opening, the adjusting of the charger can be easily controllable, and the charger may be made more stable.

If the current output comprises a socket for an exchangeable connector, a same charger can be used for recharging the rechargeable batteries of many different kinds of electronic devices. On one hand, the charger connectors of mobile terminals from different manufacturers, for example, have a different shape and pin order, meaning that a charger of one manufacturer does not work with a mobile terminal of another manufacturer. Furthermore, even the charger connectors of different types of mobile terminals of one manufacturer may be mutually incompatible. On the other hand, the charging voltage is usually defined by the type of the battery cells, and most mobile terminals using Lithium-Ion cells as rechargeable battery could be recharged using the same charger if the charger connector would fit.

If the adjustable means for changing the relative position comprises a hinge, one degree of freedom for the movement can be obtained in a relatively simple manner, since the hinge can be adapted to provide support in addition to enabling the movement.

If the adjustable means for changing the relative position comprises a ball joint, two degrees of freedom for the movement can be obtained. This brings the advantage that the flexibility in the manner in which the charger can be fitted in an opening with a relatively small available space only.

### Short description of the drawings

In the following, the invention is described in more detail by way of the examples shown in the accompanying drawings of Figure 2 to 6, of which:
Figure 1 shows an electronic device;
Figure 2 shows a charger;
Figures 3A and 3B show the turnable or rotatable head in two different positions;
Figure 4A is a section in a first direction of the ferrite, and primary and secondary inductances of a charger;
Figure 4B is a section in a second direction of the ferrite, and primary and secondary inductances of a charger;
Figure 5A shows a top view of the base;
Figure 5B shows a top view of the turnable or rotatable head; and
Figure 6 shows a further embodiment of a charger.

Same reference numerals refer to similar structural elements throughout the Figures.

### Detailed description of the invention

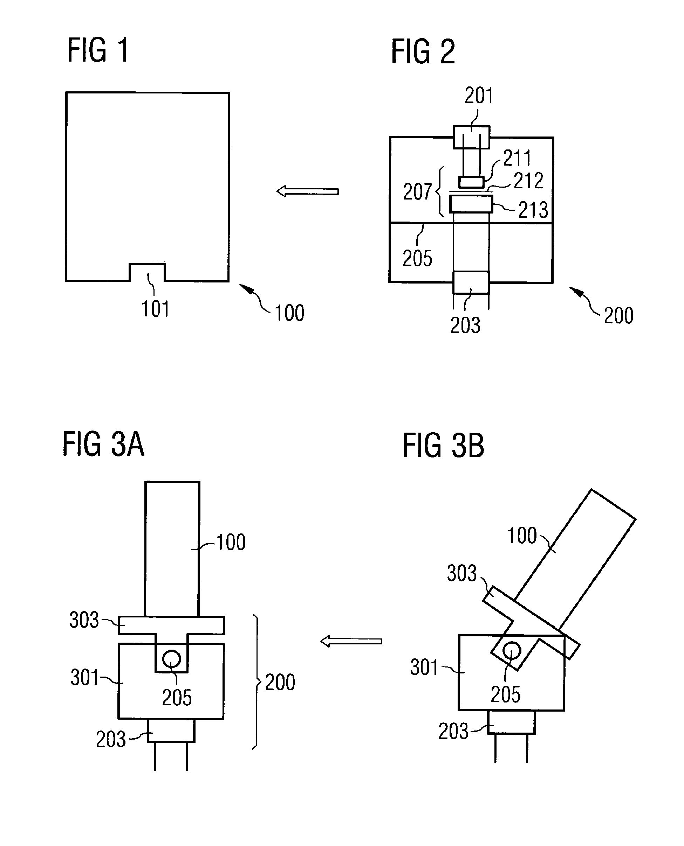

Figure 1 shows an electronic device 100 comprising a power cradle 101. This is where the charger connector is plugged when the electronic device 100 is to be recharged.

Figure 2 shows a charger 200. The charger 200 comprises a charge input connector 203, a charge output connector 203, and means 207 for transforming an input current received through the current input connector 203 to an output current and passing it to the current output connector 201. The charger 200 further comprises adjustable means 205 for changing the relative position between the current output connector 201 and the current input connector 203.

The charger 200 further comprises a primary inductance 213, a secondary inductance 211, and a ferrite core 212. The primary inductance 213 and the secondary inductance 211 may be coils having a different number of windings, preferably in such a manner that the secondary inductance 211 comprises a smaller number of windings than the primary inductance 213. One purpose of the ferrite core 212 is to improve magnetic coupling between the primary inductance 213 and the secondary inductance 211.

The adjustable means 205 for changing the relative position between the current output connector 201 and the current input connector 203 comprises preferably a hinge or a ball joint.

According to one aspect of the invention, the adjustable means 205 for changing the relative position between the current output connector 201 and the current input connector 203 may comprise ferritic material.

Figures 3A and 3B show the turnable or rotatable head 303 in two different positions, and an electronic device 100 connected to the charger 200.

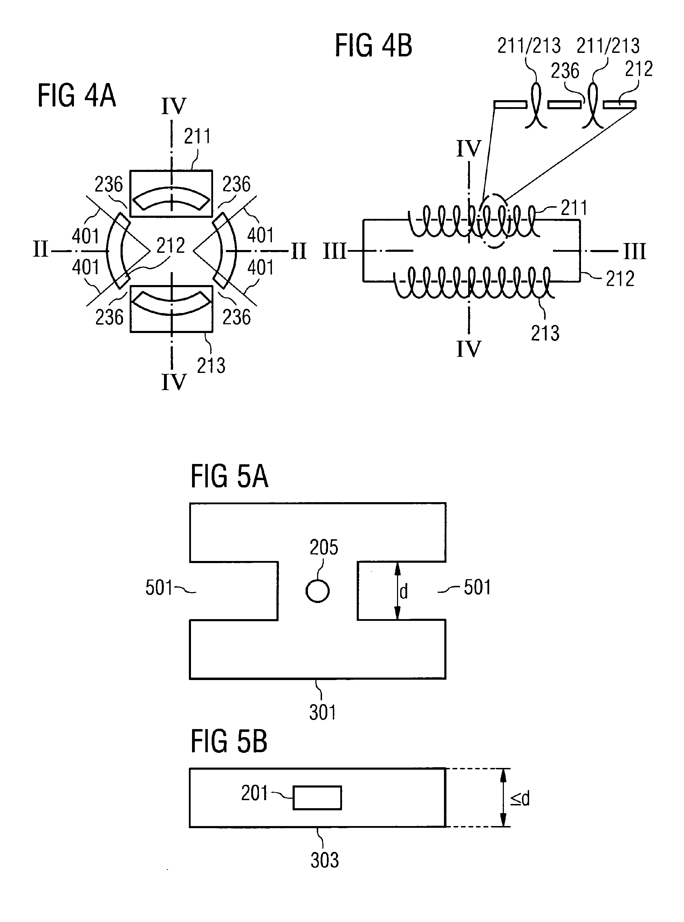

In the example, the adjustable means 205 provides at least one degree of freedom for movement of the head 303 so that the head 303 can be turned. The body 301 has an opening or recess 501 as illustrated in Figure 5A to enable the protrusion in the head 303 (Figure 5B) to pass through.

The primary inductance 213 can be put into the body 301 and the secondary inductance 211 to the head 303. Then the adjustable means 205 may comprise ferritic material. In this case, the adjustable means 205 is a part of the ferritic core 212 or it is the ferritic core 212.

If the primary inductance 213 and secondary inductance 211 are in the head 303, then the adjustable means 205 provides an electrical contact from the mains to the primary inductance 213. In the other case, i.e. if the primary inductance 213 and the secondary inductances 211 are in the body 301, the adjustable means 205 provides an electrical contact from the secondary inductance 211 to the current input connector 203.

Figure 4A is a section in a first direction of the ferrite 212, and of the primary inductance 213 and secondary inductance 211 of a charger 200.

The primary inductance 213 and the secondary inductance 211 can be arranged around a ferrite 212. The ferrite 212 can have a form of a cylinder, around which the primary inductance 213 and secondary inductance 211 are arranged. Then by sliding the primary inductance 213 or secondary inductance 211 on the ferrite 212, the relative position between the primary inductance 213 and the secondary inductance 211 can be changed, changing also the relative position between the charge input connector 203 and the charge output connector 201.

The charger 200 may further comprise means 401 for limiting movement of said adjustable means 205. The means 401 for limiting movement of said adjustable means 205 can be adapted to limit the movement of the primary inductance 213 or the secondary inductance 211.

The ferrite 212 may comprise a number of openings 236 at the region where the primary inductance 213 or the secondary inductance 211 are located, for enabling the primary inductance 213 or secondary inductance 211 to extend to both inside and outside the ferrite 212. The openings 236 may be in form of slits the length of which is at least equal to the allowed movement of the primary inductance 213 or of the secondary inductance 211.

Figure 4B is a section in a second direction of the the ferrite 212, and of the primary inductance 213 and secondary inductance 211 of a charger 200. The zoomed view illustrates better how the openings 236 are constructed in the ferrite 212.

Figure 5A shows a top view of the base 301. The current input connector 203 is accommodated on a base 301 that further shows an opening 501.

Figure 5B shows a top view of the turnable or rotatable head 303. The current output connector 201 is accommodated on a rotatable or turnable head 303 that comprises a member fitting to said opening 501.

A ball joint can be used instead of a hinge. Then the head becomes rotatable. The ball joint can be designed to comprise a part of the magnetic core.

In order to make the charger 200 a universal charger, the current output connector 203 may comprises a socket for an exchangeable connector. Then simply by plugging a right type of connector into the socket, the charger 200 can be used for recharging a desired electronic device 100.

The charger 200 plugged in the mains socket preferably forms a stable stand for the electronic device 100 being charged. If the mains socket is placed on a table in the manner usually done in an office environment, the charger 200 can easily be used as a stand for the electronic device 100. On the other hand, if the charger 200 is placed on a mains socket installed into a wall, the charger 200 can be bent approximately 90 degreens in order to change the electronic device 100 being charged into an upright position.

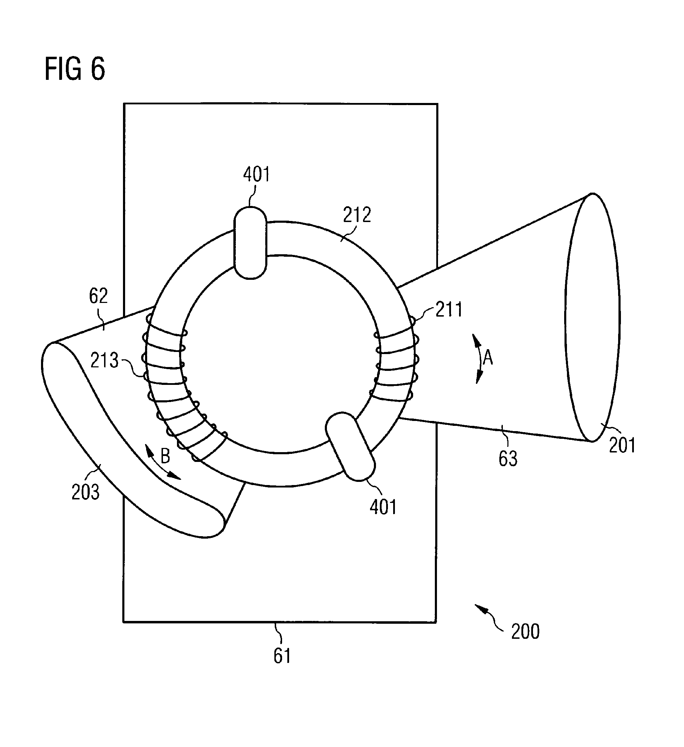

Figure 6 shows a further embodiment of a charger 200. The ferrite 212 has now a shape of a ring around which the primary inductance 213 and the secondary inductance 211 have been installed. The primary inductance 213, the secondary inductance 211, or both are movable which has been illustrated by way of arrows A and B. There are preferably at least two means 401 for limiting the movement of the primary inductance 213 or secondary inductance 211 or both, in order to prevent them being short-circuit by touching each other. The means 401 for limiting the movement of the primary inductance 213 or secondary inductance 211 or both are preferably installed around or on the ferrite 212. The material of which the means 401 for limiting the movement of the primary inductance 213 or secondary inductance 211 are made preferably comprises non-conductive, non-magnetic material, such as ceramics or glass, or plastic.

The primary inductance 213 is further connected to a current input connector 203 which may be protected by a non-conducting shield 62, such as made of plastic. A further effect of the non-conducting shield 62 is to increase the stability of the structure between the primary inductance 213 and the current input connector 203.

The secondary inductance 211 is further connected to a current output connector 201 which may be protected by a non-conducting shield 63, such as made of plastic. A further effect of the non-conducting shield 63 is to increase the stability of the structure between the secondary inductance 211 and the current output connector 201.

The charger 200 may further comprise a housing 61 for protecting the ferrite 212 and possibly the primary inductance 213 and secondary inductance 211 as well. The housing 61 may comprise one or two openings to enabling the moving of the non-conducting shields 62 or 63.

The primary inductance 213 or the secondary inductance 211 are preferably movable by hand.

The primary inductance 213 and secondary inductance 211 preferably comprise a number of windings which may be either densely wound together in order to provide an adequate support for the windings, or around the primary inductance 213 or secondary inductance 211 there may be a further support structure. The purpose of the supports or of the support structures is to make the inductances better movable, i.e. to reduce mechanical stress on each of the windings that otherwise could cause wearing.

The current output connector 201 can further comprise a socket for exchangeable connector in order to enable recharging different kinds of electronic devices 100.

The skilled person appreciates that the invention as described in way of previous examples is not limited by these, but only by the scope of the accompanying patent claims. Especially, the ferrites 212 and the different arrangements of the primary inductance 213 or secondary inductance 211 in relation to different ferrites 212 disclosed in different embodiments of the invention may be interchanged. Furthermore, the current input connector 203 preferably corresponds to that fitting to a mains socket or to a standard cigarrette lighter socket available in a passenger car.

## Claims

1. A charger (200), comprising:
- a current input connector (203);
- a current output connector (201); and
- means (207) for transforming an input current received through the current input connector (203) to an output current and passing it to the current output connector (201) further comprising a primary inductance (213) and a secondary inductance (211);
**characterized in that**:
the charger further comprises adjustable means (205) for changing the relative position between the current output connector (201) and the current input connector (203) thereby moving the primary inductance (213) or the secondary inductance (211).

2. A charger (200) of claim 1, wherein: said primary inductance (213) or secondary inductance (211) is moved on, in, around, or at a ferrite (212) placed between the primary inductance (213) and the secondary inductance (211) of the charger (200).

3. A charger (200) of claim 2, wherein: said ferrite (212) comprises at least a elongated opening (236) for enabling the primary inductance (213) or secondary inductance (211) to be moved.

4. A charger (200) according to any of the preceding claims, further comprising: means (401) for limiting movement of said adjustable means (205), of the primary inductance (213), or of the secondary inductance (211).

5. A charger (200) of claim 4, wherein: the means (401) for limiting movement of said adjustable means (205), of the primary inductance (213), or of the secondary inductance (211) joins to a ferrite (212).

6. A charger according to any of the preceding claims, **wherein:** said adjustable means (205) is adjustable by rotating or turning.

7. A charger (200) according to any of the preceding claims, **wherein:** the current output connector (201) is accommodated on a rotatable or turnable head (303).

8. A charger (200) according to any of the preceding claims, **wherein:**
- the current input connector (203) is accommodated on a base (301) that further shows an opening (501); and
- said turnable head (303) comprises a member fitting to said opening (501).

9. A charger (200) according to any of the preceding claims, **wherein:** the current output connector (203) comprises a socket for an exchangeable connector.

10. A charger (200) according to any of the preceding claims, **wherein:** said adjustable means (205) for changing the relative position comprises a hinge.

11. A charger (200) according to any of the preceding claims, **wherein:** said adjustable means (205) for changing the relative position comprises a ball joint.
